# EUROPEAN PATENT SPECIFICATION

(11) **EP 1 397 034 B1**
(45) Date of publication and mention of the grant of the patent: **27.10.2004**
(21) Application number: 02743963.7
(22) Date of filing: 19.06.2002
(51) Int. Cl.: A01C 11/02

(54) **DEVICE FOR PLACING PLANT MATTER ONTO OR IN A BED**
VORRICHTUNG ZUM PFLANZEN VON PFLANZEN IN ODER AUF EIN BEET
DISPOSITIF DE MISE EN PLACE DE MATIERE VEGETALE SUR OU DANS UNE PLATE-BANDE

(30) Priority: 20.06.2001 NL 1018343; 20.06.2001 NL 1018342
(43) Date of publication of application: 17.03.2004
(73) Proprietor: Silca Apparatenbouw B.V., 5311 PC Gameren (NL)
(72) Inventor: HENDRIKS VAN WARBIJ, Johannes, NL-5311 PC Gameren (NL); EVERTSE, Marinus, Johannes, NL-4268 GP Meeuwen (NL); DE GRAAFF, Peter, NL-4267 GZ Drongelen (NL); HENDRIKS VAN WARBIJ, Michiel, Gerardus, NL-5305 BJ Zuilichem (NL); VAN DER MEIJDEN, Robertus, Wilhelmus, Josephus, NL-5071 RK Udenhout (NL); ROSSEN, Geertjan, Sebastianus, Hermanus, Johannes, NL-6621 ZH Dreumel (NL)
(74) Representative: Dokter, Hendrik Daniel
(86) International application number: PCT/NL2002/000401
(87) International publication number: WO 2003/000033

(56) References cited:
- EP-A- 0 910 938
- GB-A- 1 557 004
- NL-A- 7 713 803
- NL-C- 1 008 555

## Description

The invention relates to a device for placing plant matter such as plants or slips onto or in a bed, for example in open farm land or in a horticultural hothouse.

It is known in the practice of cultivation of plant matter in horticultural hothouses in some cases to plant plant matter such as slips of flowers in a bed by hand. This happens in cases in which slips that are to be planted in a bed are first cultivated in containers or boxes in which compost has been provided, usually in a layer which is several centimetres thick. There are e.g. about 100 slips in a container, whereby each slip has a separate clod. During cultivation, the roots of the slips often grow as to join together. This gives rise to a mat having several plant or slips, thus a collection of plants or slips with a large, common or shared clod. When being placed, a mostly unskilled and temporary worker each time separates one slip from the other slips in the container, usually by using his fingers to pry or break the roots and clod of the slip which is to be planted from those of the slips which are to remain in the container. The slip with its clod separated in this way is then picked up by hand and placed at its intended position in the bed. The work done is dependent on the person doing it, which in some cases is disadvantageous since both the capacity of production as well as the quality of placing can fluctuate strongly.

In itself there are known devices for mechanized and automated planting of seedlings of vegetable and fruit varieties in a bed whereby the seedling comprises a clod having a fixed shape and size. Such a clod is obtained by shaping it in a cell of a plastic container, whereby a pot may eventually also be present in the cell. In this case it thus relates to seedlings of which the clods are kept separated from each other.

There are several devices known in the practice for the stated object. Often these relate to mechanized and automated planting of seedlings of vegetable and fruit varieties in a bed whereby the seedling comprises a clod having a fixed shape and size. Such a clod is obtained by shaping it in a cell of a plastic container, whereby a pot may eventually also be present in the cell. In this case it thus relates to seedlings of which the clods are kept separated from each other. The seedlings including their plastic pots are taken to the planting position in the bed. When planting in a horticultural hothouse, there may be several beds which are mutually separated by means of walkways and/or heating pipes.

One known planting machine comprises a horizontal support on which the plastic pots with the seedlings rest, vertical fall-breaking screens which are placed under the containers, and means for taking the seedlings out of the container. Each seedling falls due to the gravitational force, and it falls aided by the related fall-breaking screen on its intended position in the furrow which has been prepared in the ground for this purpose.

Another known device comprises a system for gripping the seedling whereby the gripping system consists of an arm which pivots between a horizontal state in which the seedling is picked up by grippers and a vertical state in which the seedling is placed on the ground and is released by the grippers.

With yet another known device seedlings are separated row-by-row from the rest of the container. Subsequently, in the separated row they are separated from each other by placing grippers with flexible blades around the stalks of the seedlings. The number of grippers corresponds to the number of seedlings in a single row of the container. The clod of each seedling is pushed out of the pot from below by a plunger and the grippers are moved upwardly. Two mutually co-operating halves of a bowl are placed around the clod in order to transport the clod to the position at which the seedling is to be placed on the ground with the aid of the device. By moving the halves of the transport bowl away from each other above the position concerned the seedling falls onto the ground.

The known devices have the disadvantage that they can be used optimally only when the type and the quality of the seedlings which are to be planted are invariable, especially when seedlings have separate and well-defined clods. Another disadvantage thereof is that only a fixed number of plants or slips can be planted simultaneously and in an uninterrupted row.

It is an object of the invention to provide a device according to the type described in the pre-amble by use of which as little as possible manual labour is required.

It is another object of the invention to provide an improved device by use of which a high production in terms of plant matter placed can be achieved.

It is yet another object of the invention to provide a device by use of which a high quality of placement onto or in the bed can be achieved.

It is an object of the invention to provide a device of the above-described type by use of which the placement of all plantings, regardless of the variety, is improved.

It is another object of the invention to provide a device by use of which different varieties of plant matter having clods of varying condition and differing sizes can be planted.

According to the invention, one or more of these objects are achieved with a device for placing plant matter such as plants or slips onto or in a bed according to claim 1 and a method according to claim 19.

The advantage hereof is that in itself plant matter can be placed in a pattern in a bed. This is especially advantageous economically because for various types of plant matter the available area of a bed can be utilised as much and as usefully as possible. Another advantage is that with the device according to the invention plant matter can be placed along an axis of the bed or in the bed in a single run.

Preferably, the device is provided with means for determining an adjustable pattern in the bed. Inter alia, the type of plant matter which is to be planted, the shape and size of the bed and the location of the bed (in open farm land or in a horticultural hothouse, for example) give that being able to choose between planting patterns is desirable. The advantage of adjustability of the planting pattern is that with the device one can plant in different patterns, if need be within a single bed too, which affords extra operational flexibility. A better use of the ground is possible, especially when planting along an edge of the bed.

In some cases, for example when planting in open farm land where not every square inch of surface needs to be utilised, one can plant in one or more patterns without further ado. In other cases, it may desirable to take bearings of reference means which have been brought to, on or in the bed which is to be planted in relation to determining the position of the device with respect to the bed, in order to correct the position of the device if required. Therefore, the pattern-determining means of the device preferably comprise a sensor member which is suitable for detecting a pattern-reference means which has been provided onto or in the bed. Determining a position with such a possibility of correcting the determination and controlling the device on the basis of the correction improves the accuracy of the placement of plant matter in the bed.

According to a further preference, the sensor member is suitable for detecting a pattern-reference means which are one-dimensional, such as a wire, or two-dimensional such as a gauze. The more reference points there are: one, two or even three, the higher the achievable accuracy with which a pattern position can be determined and which can be planted. Another advantage relating to the nature and shape of the pattern-reference means is that the pattern-reference means are already present. In some cases, when planting a bed in a hothouse, a wire or a gauze is laid on the bed. During the growth of the planted matter, the part thereof which protrudes above the ground, such as the stalk, leaves and/or the fruit, needs to be supported. To this end, the wire or gauze is raised with the aid of a number of other wires or a lifting frame. This advantage thus relates to the use of material which is already lying on the bed as a reference means for the planting pattern.

If there are pattern-reference means lying on the bed, then it is preferable to make use of an optical sensor. If the pattern-reference means is not always visible depending on the condition of the bed and the type of ground, then it is preferable that the pattern reference means is of metal, for example in the form of a wire or gauze, and that the sensor member comprises a metal detector.

In case the sensor member comprises a metal detector or another robust sensor, the metal detector or other robust sensor is preferably mounted on a tow implement. This offers the advantage that the pattern reference means is literally probed, or is probed at least from as close as possible, which reduces the probability of detection errors. When using a tow implement, clods lying at positions which are to be planted can also be pushed aside.

According to a second aspect of the invention, the planting unit is provided with convenience members for taking the plant matter which is to be planted to its intended position on or in the bed. This offers a possibility for coupling the determining of a planting pattern to the actual placing of plant matter at intended planting positions in the bed. It offers the possibility of measuring and controlling the speed and accuracy of pattern planting.

In a further embodiment of the second aspect, the convenience members of the planting unit preferably are separately operable. This offers the advantage that variations in placements can be provided for, that an available position in the bed can optionally be planted or not be planted, such as when placing different types of plant matter in a single bed.

Further preferably, the convenience members comprise grippers which when taking plant matter engage the clod of the plant matter which is to be conveyed from above. This offers the advantage that the convenience members can be built compactly in regard of their width.

According to a further embodiment, the device is provided with a controlling unit for processing a detection signal of the sensor member into a controlling signal for the planting unit for placing plant matter at its intended position onto or in the bed. This offers advantages in terms of user-friendly adjustability of the pattern, both prior to planting as well as during planting. Other additional advantages are, inter alia, related to the uniformity of placement of plant matter and to control over the accuracy of placement, especially in comparison to the placing of plant matter onto or in a bed by hand, as happens in some cases in the area of horticulture.

According to a third aspect of the invention, the device is provided with a cutting unit for separating amongst the plant matter into plants or slips having separate clods. This affords the advantage that each plant or slip which is to be planted is provided with a separate and well-defined clod. Another advantage is that use can also be made of a collection of plants or slips which when being cultured already have a common or shared clod. This entails that plant matter which is to be placed onto or in a bed no longer has to be supplied as mutually separate items. There is thus also less space required during the culturing thereof. This further means that less packaging material needs to be processed in comparison with a situation in which plants or slips are provided beforehand with separate clods in separate pots.

According to a further embodiment, the cutting unit is provided with first cutting means for cutting the plant matter which is to be placed, in a first direction and with second cutting means for cutting in a second direction which intersects the first direction, into plants or slips having separate clods. This offers the advantage that with two simple cutting movements a plant or slip having a well-defined clod can be cut loose from a comer or an edge of plant matter adjoining the cutting unit.

According to a further embodiment, the first cutting means for cutting the plant matter in the first direction comprise a number of blades which are mounted spaced apart on an axis. This offers the advantage that a number of plants or slips can be cut simultaneously in the first direction in a single cutting movement. Another advantage is that during in use when cutting in the second direction the first blades keep the plant matter which has been cut in the first direction in place, by which the plants or slips are given same definitions not only in the first cutting direction but also in the second cutting direction.

Further preferably, the mutual spacing between the first blades have a step-less or continuous adjustability. As it is clods can dry out to various degrees before their being processed. Also, plant matter may have been cultivated in different types of compost, thus with different compositions. It is thus advantageous to be able to adapt the size of the separate clods as inferred by the condition of the clod of the plant matter which is to be cut.

Further preferably, the first cutting means are mounted on a spindle axis. A spindle axis comprises various sections with threading of differing pitch. The pitch varies in the direction from the middle toward the ends from being small to being large. This allows for the adjustment of the mutual spacing between the first cutting means which is dependent on the position thereof along the axis, to be done faster in comparison with adjustment of the mutual spacing between blades which are mounted on an ordinary axis.

In a further embodiment, one of the first cutting means, preferably the blade in the middle or a blade mounted about half-way along the length of the axis on which the first cutting means have been mounted, has a fixed position on this axis. This offers the advantage of a reference point aiding the adjustment of the mutual spacing between the blades on the axis on which the first cutting means have been provided. By choosing the reference point to be half-way along the length of the axis, the mutual spacing between the blades are easily adjusted symmetrically with respect to the middle of the length of the axis. Such a symmetrical adjustment as meant is advantageous in cases whereby a clod which has dried out more at its edges than at its centre is to be processed. A dry clod can crumble easily; by cutting plants or slips which have smaller separate clods --as seen in the second cutting direction which intersects the first cutting direction-when cutting at the ends of the common or shared clod than when cutting in the middle, any potential loss through (too) dry and therefore easily crumbling plant matter is reduced.

According to a further embodiment, the device is provided with a conveyor belt for conveying the plant matter which is to be cut to the cutting unit. This offers the advantage that no manual labour is required to bring the plant matter to the cutting unit and that mechanical conveying of the plant matter to the cutting unit can always take place in the same way.

Further preferably, the first cutting means are mounted such that during use of the device these cut through the plant matter in a first direction which is substantially parallel to the longitudinal axis of the conveyor belt. This offers the advantage that the cutting unit and the plant matter which is to be cut can be positioned easily in regard of each other in order to have all first cutting means cut across the same length through the plant matter. This allows for the use of blades having same shapes and sizes for this purpose.

Further preferably, the second cutting means comprise a blade which when used cuts the plant matter, which has been cut in the first direction, loose across the whole of its width into plants or slips having separate clods. This offers the advantage that by means of a simple construction of the cutting means and two cutting movements to be performed therewith in two intersecting cutting directions, a strip of plant matter can be cut into a number of plants or slips having same and well-defined separate clods.
In a further embodiment, the device is provided with centre-ing means for centre-ing the plant matter which is to be cut with respect to the blade in the middle or a blade which is about half-way along the length of the axis on which the first cutting means have been mounted. This offers the advantage that the plant matter which is to be supplied can be cut symmetrically with respect to the centre-line in the longitudinal direction of the plant matter, which provides for a consistent cutting result.

According to a further embodiment, the device is provided with a buffering unit between the cutting unit and the planting unit for temporarily accumulating the plants or slips having separate clods which come from the cutting unit. This way, the convenience members of the planting unit do not have any lack of plants or slips, which favours continuous operation of the device.

Preferably, the device is provided with a controlling unit for processing a signal from the cutting unit into a controlling signal for the planting unit for placing plants or slips having separate clods at their intended positions onto or in the bed. This offers more possibilities for tuning, in regard of measurement and control, of the stream of plants or slips with separate clods coming from the cutting unit with respect to the stream of plants or slips going through the buffering unit which are to be placed by the planting unit onto or in the bed.

Preferably, the device is provided with a controlling unit for processing a detection signal from the sensor member into a controlling signal for the planting unit for moving, on the basis of this controlling signal, the plants or slips having separate clods which come from the cutting unit to the buffering unit and placing the plants or slips having separate clods which have been cut loose from there at their intended positions on or in the bed. This offers possibilities for tuning, in regard of measurement and control, of the stream of plants or slips with separate clods coming from the cutting unit with respect to the stream of plants or slips to be formed through the buffering unit which are to be placed by the planting unit onto or in the bed.

A device according to the invention is preferably provided with a driveable frame having a level-controlling system. This offers the advantage that in use the device can be kept at a constant distance from and substantially parallel to the surface of the bed, which makes the placing of a plant or slip perpendicularly onto or in the bed easy.

The invention will now be further described and further embodiments will be elucidated with reference to an example of an embodiment and its corresponding drawings. In the drawings
Figure 1 depicts a perspective plan view of a device which is provided with pattern-determining means, a planting unit, a cutting unit and a buffering unit according to the invention;
Figure 2 depicts a perspective side view of the device according to Figure 1;
Figure 3 depicts a side view and a front view of a tow implement and a sensor holder of the pattern-determining means according to the invention;
Figures 4 and 5 depict a number of examples of convenience members of a planting unit according to the invention;
Figure 6 depicts an enlarged view of the cutting unit of the device according to Figure 1; and
Figure 7 depicts a side view of the cutting unit according to Figure 6.

The figures are schematic and are not drawn to scale. In the figures, corresponding numerals refer to corresponding parts of the embodiments of the device shown.

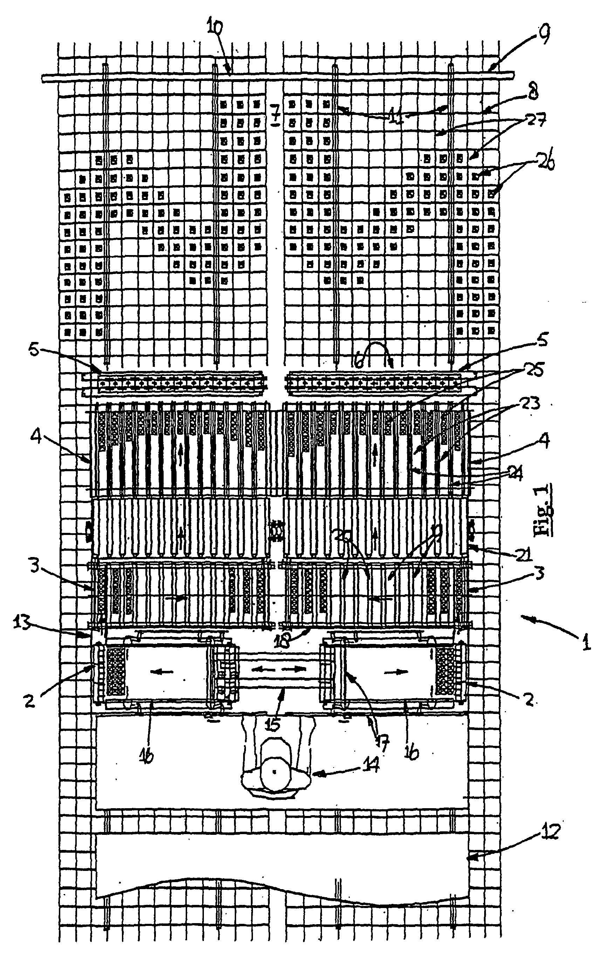

Figure 1 depicts as seen from above a device 1 which is provided with two cutting units 2, two distribution belts 3, two buffering units 4, two planting units 5 and pattern-determining means 6 according to the invention. There is a bed 7, in this example a bed in a horticultural hothouse. There lies a gauze 8 on the bed surface. The gauze 8 is connected to a lifting frame 9 of which a sleeper beam 10 can be seen. There are heating pipes 11 in a right-angled orientation with respect to the sleeper beams 10 of the lifting frame 9. The heating pipes 11 serve as conveyance pipes for the device 1 and a transportation cart 12 with which plant matter which is to be cut (not shown) is supplied. The device 1 comprises a driveable frame 13 on which an operator 14 can take a place. The device 1 further comprises a conveyor belt 15 which on either of its sides adjoins a supply belt 16. In this example, the device is in a duplicated configuration, and is thus provided with two cutting units, two distribution belts, two buffering units, two planting units, etc. In order to be able to oversee the description, only one half of the device (the one at the right-hand side of the figure) will be described in the following.

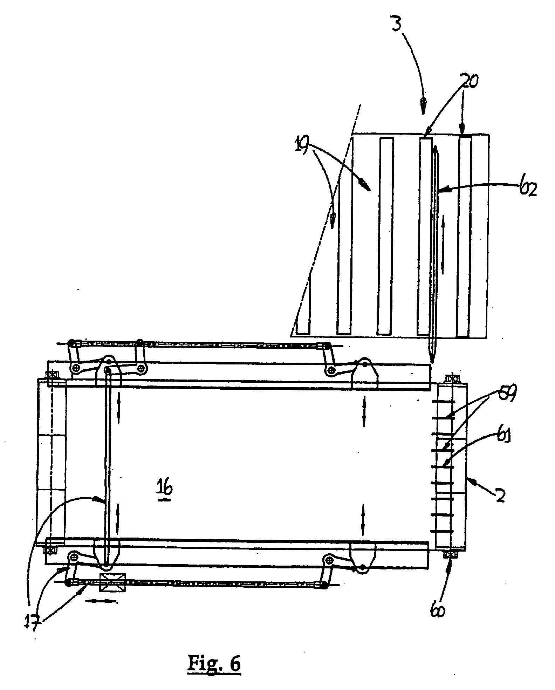

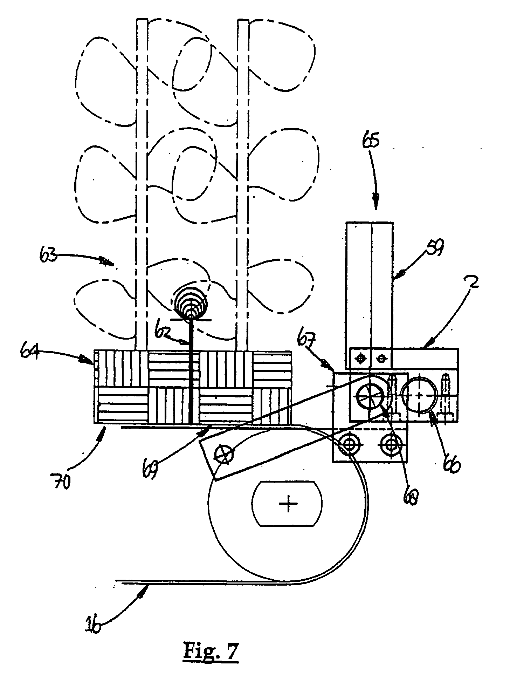

The supply belt 16 is provided at either side with respect to its longitudinal direction with centre-ing means, in this case an arrangement of rods 17, which serves for centre-ing the plant matter on the supply belt. The supply belt 16 is used for taking plant matter which is to be cut to the cutting unit 2. Further description of the cutting unit will follow later with reference to Figures 6 and 7. The device 1 is provided with sliding means (not shown) for sliding the plants or slips having separate clods which have been cut loose during operation onto a distribution belt 3. The distribution belt 3 comprises an endless belt 18 which is provided with a number of rows 19 which in turn are provided laterally with respect to the direction of movement (indicated by arrows) of the distribution belt. The rows 19 are mutually separated by upright edges 20.

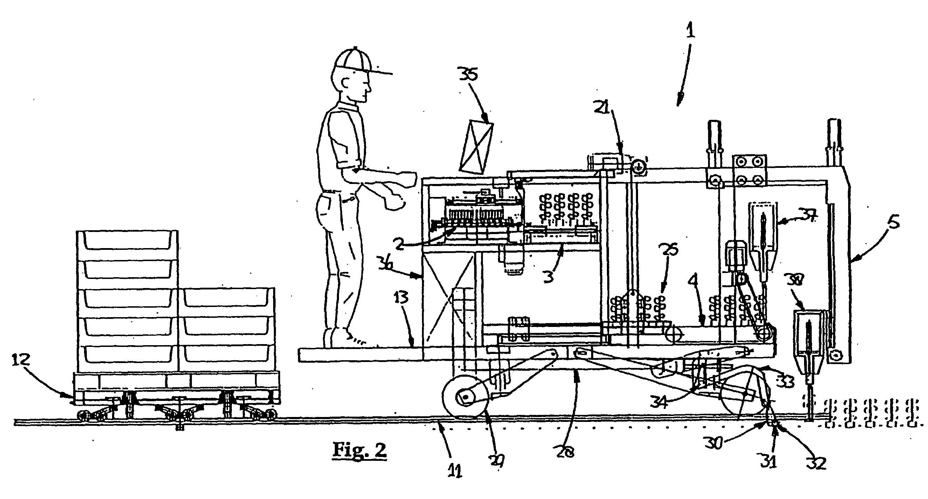

The distribution belt 3 is connected at its side which faces away from the cutting unit 2 to a lifting installation 21 (which is to be described later with reference to Figure 2). The lifting installation 21 in turn is connected to a buffering unit 4, which just as with the distribution belt 3 is provided with a number of rows 23 which are mutually separated by upright edges 24. It can be seen in the figure that the rows 23 of the buffering unit have been provided with different numbers of plants or slips having separate clods 25, in anticipation of the placing thereof on the bed 7 by means of the planting units 5. Planted positions 26 or unplanted positions 27 according to the planting pattern , as the case may be, are to be seen at the top of this figure.

Figure 2 depicts the device according to Figure 1 as seen from the right. This figure shows the undercarriage 28 of the driveable frame 13 which is provided with wheels 29 that track on the conveyance pipes 11. There is a tow implement 30 mounted to the undercarriage 28. The tow implement is provided with a sensor 31 which is mounted in a suspended holder 32 that is connected to an end of a bent arm 33. The arm 33 is connected at its other end, in a way in which it can pivot vertically, to an axis 34, which axis is connected to the underside of the undercarriage 28 of the device. There is a display screen 35 of a computer (not shown) belonging to the pattern-determining means, which is provided in a house 36 on the driveable frame 13. Figure 2 further shows in some detail means for moving plants or slips having separate clods from the distribution belt 3 to the buffering unit 4. These moving means comprise a lifting installation 21. The lifting installation 21 serves the purpose of bringing plants or slips, which at this stage of the operations have been cut loose and meanwhile have been sorted, by means of the distribution belt 3 lower and closer to the bed by moving them to the buffering unit 4. It is from the buffering unit 4 that a planting unit 5 picks up the plants or slips having separate clods and places them onto or in the bed. The planting unit 5 is shown in two states: a state 37 above the plants or slips which are to be placed when these are being gripped, and a state 38 above the bed when the plants or slips 25 are actually being placed onto or in the bed.

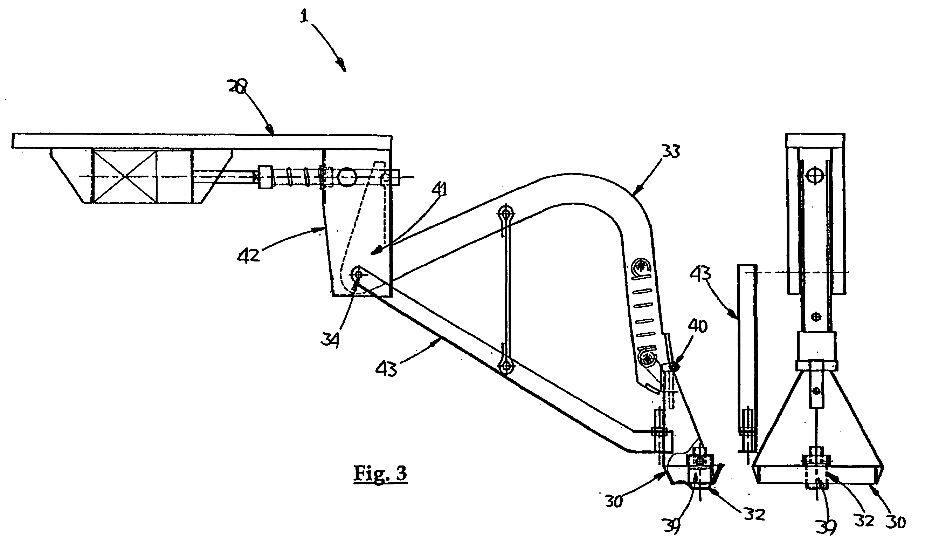

Figure 3 depicts a side view and a front view of a tow implement, and a sensor holder of the pattern-determining means according to the invention. The tow implement 30 comprises a metal detector 39 in a suspended holder 32. The tow implement 30 is connected, in a way in which it can pivot vertically, to an axis 40 which has been provided on an end of a bent arm 33, which arm 33 is connected at its other end 41 through an axis 34 and a mounting plate 42 to the undercarriage 28 of the device 1. There is also a detection beam 43 connected to the axis 34, in a way in which the former can pivot vertically. The detection beam 43 comprises a sensor which serves the purpose of physically probing any obstacle which may lie against the conveyance pipe, such as a connection of the conveyance pipe with an underlying lifting frame.

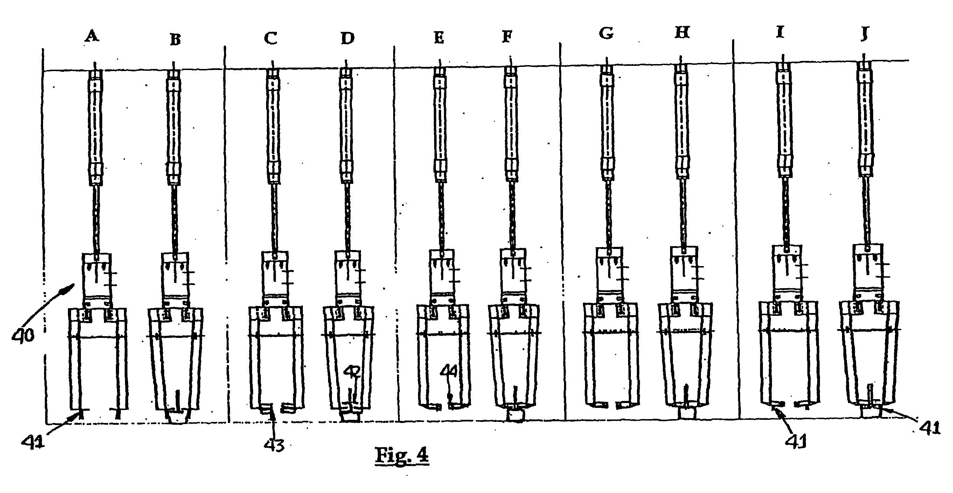

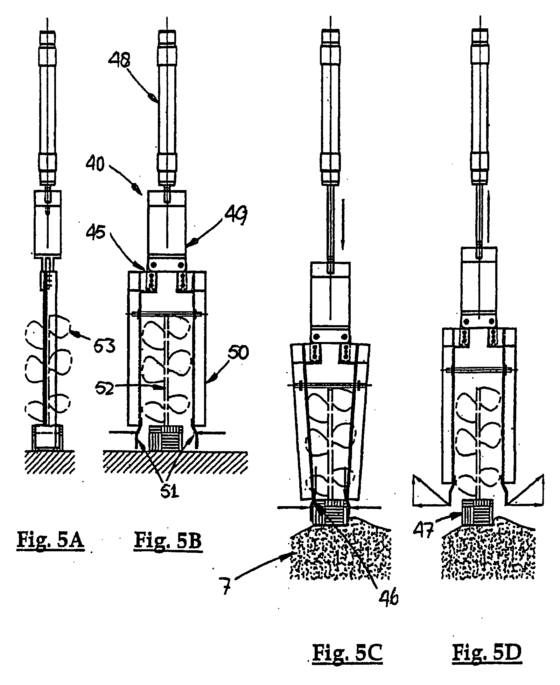

Figures 4 and 5 depict some examples of convenience members of a planting unit according to the invention. The convenience members shown are grippers 44 which, at their undersides, are provided with clamping means 45 that grip onto a clod (shown schematically) which is to be moved (Figs. 4A and 4B), or grippers having rubber ribs 46 for gripping onto the stalk of a plant or slip and having a metal profiled shape 47 for gripping onto the clod (Figs. 4C and 4D). The grippers can also grip onto the stalk of a plant or slip by means of its rubber ribs and sponge material 48 and grip onto the clod by means of its metal profiled shape (Figs. 4E and 4F). According to Figs. 4G and 4H the grippers having rubber ribs can grip onto both the stalk of a plant or slip as well onto the clod thereof. According to examples 4I and 4J, the grippers grip onto the stalk of a plant or slip by means of rubber ribs and onto the clod by means of clamping comer pieces 45, 49. Convenience members 44 according to the embodiments 4A, 4B and 4I, 4J are preferable because the clamping comer pieces 45, 49 with which they have been provided grip onto the clod of a plant or slip from above. In particular, these clamping corner pieces grip onto a clod at its top edge from two opposite sides, whereby the clamping comer pieces press on the clod both from above as well as from aside. This is advantageous in light of keeping the clod intact.

Figure 5A shows a side view and Figures 5B, 5C and 5D show front views of some stills of the movement carried out by a gripper 44 which, in the example shown, has the shape of a kind of jack 50 that is provided with profiled contact pieces 51 with which a clod 52 can be gripped. There is shown a displacement means such as a hydraulic or pneumatic cylinder 53, on which a connecting block 54 has been mounted at its underside. There are two gripping arms 55, which can be moved towards each other, that are pivotably mounted onto the underside of the connecting block 54. The gripping arms 55 are each provided at their undersides with a clamping plate 56, such that a clod 52 can be gripped at its top edge from two opposite sides whereby the contact surfaces 51 that have been provided on the inside of the clamping plates press on the top edge of the clod at an angle. In a first step for gripping a clod 52 (see 5A and 5B), the cylinder 53 is brought into position above a plant or slip which is to be gripped whereby the gripping arms 55 are spread and they enclose the stalk 57 of the plant or slip from two sides without the leaves of the plant or slip being touched. Subsequently (see 5B, arrows), the gripping arms are moved towards each other in order to grip the clod 52 as has just been described above. The gripping arms thereby also come into contact with the leaves of the plant or slip. Next, the cylinder 53 including its attachments is moved to above the planting position in the bed. The cylinder 53 is then moved lower (see 5C, arrow) till the clod has been placed onto or in the bed whereby the gripping arms 55 still press on the clod 52. In a final step, first the gripping arms are moved apart (see 5D) in order to let loose of the plant or slip and subsequently the cylinder 53 is moved upward and further away.

Figure 6 depicts a plan view of a device comprising a supply belt, centre-ing means and a cutting unit according to the invention. There is only one cutting unit 2 shown in this figure, corresponding to the one shown at the right-hand side of Figure 1. The supply belt 16 is endless and it can convey both in a forward as well as in a rearward direction. The supply belt 16 is used for conveying plant matter which is to be cut (not shown) from left to right with respect to the figure (therefore, actually from the middle in the longitudinal direction of the device 1, where a conveyor belt (not shown here) has been provided, whereby the conveyor belt delivers the plant matter at the supply belt), to the cutting unit 2, at the right-hand side of the figure. The cutting unit comprises a number of blades 59 which are provided for cutting in a first direction, whereby the first direction coincides with the longitudinal direction of the supply belt. There is an uneven number of blades provided on an axis 60. The blade in the middle 61 has a fixed position on the axis 60. The supply belt is provided on either side with respect to its longitudinal direction with an arrangement of rods 17 which serves for centre-ing the plant matter on the supply belt. The arrangement of rods 17 centres the plant matter with respect to the middle of the width of the supply belt, so that during operation the blade in the middle 61 can cut lengthwise through the middle of the width of the plant matter. The working of the arrangement of rods 17 will be clear with reference to the double-headed arrows which indicate in which directions the rods and the arms onto which the rods are mounted can move. The cutting unit further comprises second cutting means, in this example formed by a single blade 62 which cuts in a second direction, as seen in the figure perpendicularly from top to bottom, whereby this second direction intersects the first direction (from right to left in the figure). There is also a partly cut-out section of a distribution belt 3 shown, onto which the plants or slips with separate clods that have been cut loose are slided (through the use of sliding means, not shown) in order to be distributed and to be taken to a buffering unit (not shown). The distribution belt comprises a number of rows 19 which are orientated laterally with respect to an endless belt, whereby the rows are separated from each other by upright edges 20. The direction of movement of this distribution belt is from the right to the left in the figure.

Figure 7 shows a side view of the cutting unit according to Figure 6. The supply belt 16 is shown near its end at which it adjoins the cutting unit 2. There is plant matter 63 having a common or shared clod 64 which is to be cut lying on top of the supply belt. The first cutting means, the blades 59, for cutting the plant matter in the first direction are shown in a state 65 whereby they stand free of the plant matter. The blades 59 are mounted on a spindle axis 66. The spindle axis 66 comprises various sections with threading of differing pitch. The pitch varies in the direction from the middle toward the ends from being small to being large. The blade in the middle on this axis has a fixed position; that is why the plant matter has to be centred on the supply belt. Incidentally, it is possible to mount the blades on an ordinary axis, such that the position of each blade can be set separately, step-lessly and by hand. The numeral 67 refers to a block around which the cutting unit can pivot vertically. The numeral 68 refers to a hinge axis for moving the block 67 and the part of the cutting unit in which the cutting means 59 have been provided. The second cutting means, formed in this case by the single blade 62, are depicted in a state in which the single blade 62 is positioned between a row of plants 69 which have already been cut in the first direction and the rest of the plant matter 70.

The following is a further description of use of the pattern-determining means, in particular the sensor member and the tow implement which form part of it. According to the invention, the pattern-determining means comprise at least one sensor member and preferably multiple sensor members for each bed which is to be planted. The sensor members are, as the case may be, mounted on a tow implement, depending on the type of sensor used (for physical probing, or for optical or radar detection, for example). Incidentally, the tow implement can have a special shape, such that when it is dragged or pulled over and along the gauze lying on the bed, any clods or other obstacles present and blocking the path are pushed aside. If an obstacle (for example a sleeper beam of the lifting frame) blocks the path of a device on a conveyor pipe, then the obstacle is detected by the detection beam which sends a signal that is processed into a controlling signal in order to have the tow implement raised at a suitable moment just prior to the obstacle and to have it set down just behind the obstacle in order to prevent damage to the tow implement and/or to the sensor members. The sensor, too, can be provided in a suspended holder.

When two sensors detect the gauze, then the optimum position which is to be planted is determined on the basis of the detection signals concerned. The planting unit is provided with a related instruction on the basis of this determination.

In further detail, detection of the gauze material comprises the steps of: (a) driving the device over or along the bed which is to be planted, (b) detecting the gauze material by means of a sensor and sending the related signals to the computer; and (c) processing the signals by the computer into a signal to be sent to the planting unit for planting the clod-bearing slip at the determined position of the pattern.

When a device is further provided with a detection beam which is connected to a tow implement, then when being driven according to step (a) the tow implement is dragged over the bed. Following that, an obstacle which may be lying against the conveyance pipe, such as the lifting frame, is detected with the aid of the related sensor of the detection beam and a signal is forwarded to the computer; and after step (b) the signal is processed by the computer into a controlling signal for the tow implement; and the tow implement is steered such that it is raised over the obstacle and set down behind the same.

A method of use of the planting unit according to the invention will now be described in some detail. The convenience members of the planting unit comprise grippers which preferably are each separately controllable. The force with which a plant or slip is pressed into the bed comprises the steps of: (a) bringing one or more grippers of the planting unit above the plants or slips having separate clods which are to be gripped and which stand ready in the buffering unit; (b) gripping the plant or slip from above such that the grippers grip onto the clod of the plant or slip; (c) moving the grippers to above the planting position; moving the grippers downward such that the plant or slip having a clod is set down at the determined position onto or in the ground; (e) letting loose of the slip having a clod which was gripped and drawing back the grippers to a rest position or to a following position at the buffering unit. Optionally, after step (d) the plant or slip having a clod which has been set down onto or in the ground can be pressed down. The convenience members of the planting unit comprise grippers which preferably are each separately controllable. The force with which a plant or slip is pressed into the bed is preferably also separately controllable.

Use of the cutting unit according to the invention will now be described. A method of use of the cutting unit comprises the steps of: placing plant matter having a common or shared clod on the conveyor belt, moving the plant matter from the conveyor belt to a supply belt, centre-ing the plant matter on the supply belt with the aid of the arrangement of rods, feeding the centred plant matter to the cutting unit, positioning the plant matter against a rear stop of the cutting unit, cutting the plant matter in a first direction (which in this example coincides with the longitudinal direction of the supply belt), drawing back the rear stop, cutting loose the plant matter which has been cut in the first direction with the aid of the second cutting means so that the partly cut separate clods which are to be are now also cut completely loose from the rest of the plant matter, which rest still has to be cut in the first direction, moving back the supply belt a little, drawing back the first cutting means which cut in the first direction, sliding the plants or slips having separate clods onto the distribution belt, drawing back the second cutting means, and again bringing the rear stop of the cutting unit to its starting position. It will be clear that with all these steps plants or slips with individual and well-defined clods are obtainable and that some steps can be performed differently, such the drawing back of the second cutting means together with the sliding of the plant or slips having individual clods which have been cut loose onto the distribution belt.

The driveable frame and the level-controlling system of the device are now further described. The driveable frame is provided with wheels of which a number are driven wheels. Incidentally, alternatives to wheels are imaginable, such as caterpillar tracks, etc. The wheels are of plastic and are provided with a cord at their circumferences in order to prevent slippage on the conveyance pipes. The wheels are slightly dislocated with respect to each other in order to allow the device to move gradually over connecting braces of the conveyance pipes on the sleeper beams of the lifting frame. The transmission of the wheels should be substantially without slack because there is a pulse counter connected to it that has to send the exact distance which has been covered on to the computer. Other positioning systems can also be used instead of a pulse counter. The driveable frame has, in principle, two driving speeds, a travelling speed and a planting speed, which speeds are adjustable without steps. The wheels are provided in wheels carriages which are made of jacking arms, because during planting a vertical movement has always to be made perpendicular with respect to the driveable frame in order to be able to place (a plant or slip) upright at the pattern position.

Sometimes it is the case that the bed is not horizontal across the whole of its length (which may be several tens or metres to several hundreds of metres long). If it relates to a bed in a horticultural hothouse, it may happen that the conveyance pipes are mounted above the lifting frames. In some cases the device makes too large vertical deflections when following an undulating track. Depending on the system of lifting frame used, this can make a constant and uninterrupted operation difficult. To this end, the driveable frame is provided with a level-controlling system in a further embodiment. The level-controlling system used in the present example of the device comprises a number of sensors, preferably four, which are placed at the comers of the driveable frame. These sensors measure the distance between the driveable frame and the bed and pass the measurements on to the computer. A hydro-pneumatic bellows system, in the present case comprising eight bellows, keeps the driveable frame at substantially a constant distance with respect to the bed surface. There are four water/air-separators provided at the comers of the driveable frame, since the bellows are partly filled with water in order to obtain a great stability of the driveable frame. With this system, the driveable frame is kept at an almost constant distance with respect to the bed surface, with a deviation of up to approx. 10 mm.

The following is a description of a method of use of the device comprising the pattern-determining means, the planting unit, the buffering unit and the cutting unit. This device comprises a module; when several devices can be provided on a single driveable frame, just as many beds can be planted at the same time. An operator makes use of the operating panel and the screen of the device to make a choice between a number of planting patterns which have been stored in the memory of the device's computer. Next, the operator takes one or more containers containing plant matter having a common or shared clod from the conveyor carriage behind him and places it on the conveyor belt of the device (which at the working height for the operator). With the aid of a feature of the device which will not be described here, the common or shared clod is taken out of the container in a fully automated manner and shoved onto a supply belt. Which supply belt is used depends on the availability thereof, which is determined on the basis of the chosen operating conditions. There is an automatic centre-ing device mounted on the supply belt from which the clod is taken to the cutting unit. The cutting unit ensures that the plant matter is cut both in the longitudinal direction as well as in the lateral direction into plants or slips having separate clods. Subsequently, the plants or slips are shoved on to a distribution belt. At this stage, the distribution belt rotates row-by-row in front of the cutting unit. After the rows of the upper side of the distribution belt have been filled from out of the cutting unit in accordance with the stock required by the buffering unit, the plants or slips are taken to the lifting installation. Using the lift, the plants or slips are lowered, to bridge the height between the working height of the operator and the height of the undercarriage of the driveable frame which the planting height. When the plants or slips have been lowered, they are shoved on to a buffering belt. Thus, there are plants or slips on the buffering belt which already to be taken along by the grippers of the planting unit in accordance with the chosen planting pattern so that they can be set onto or in the bed. The workings of the various units of the device can be mutually attuned such that up to approx. 10,000 plants or slips per hour can be planted.

Using one or more of the above-described aspects of the device according to the invention, thus one or more beds can be simultaneously planted with plants or slips having separate clods in a pre-determined pattern. The bed may lie in a horticultural hothouse or in open farm land. Only a single unskilled operator is required for operating the device. The planting pattern may vary from a single to multiple rows, within a row and optionally with interruptions, usually parallel to or at a right angle to the direction of movement of the device. The plants or slips are planted in the middle of the effective space of the position which is to be planted according to the chosen pattern. When planting in open farm land no pattern-reference means or conveyance pipes are required. One can simply plant in a computer-controlled operation in a chosen pattern without having to take account of the sizes or edges of the bed which is to be planted. The main advantage of using the device according to the invention is that a bed or field can be planted in any desired pattern in a single run.

## Claims

1. Device for placing plant matter such as plants or slips onto or in a bed, for example in open farm land or in a horticultural hothouse, whereby the device is provided with means for determining an adjustable pattern in the bed, with a sensor member which is optionally mounted on a tow implement and comprising an optical sensor or a metal detector which is suitable for detecting a pattern-reference means, such as a wire or a gauze that has been provided onto or in the bed, and with a planting unit for plating the plant matter at the pattern-determining positions onto or in the bed, whereby the planting unit is provided with convenience members for taking the plant matter which is to be planted to its intended positions on or in the bed, and whereby the convenience members of the planting unit are separately operable,
**characterized in that**,
the convenience members comprise grippers which when taking plant matter engage the clod of the plant matter, which is to be conveyed, from above and which are to be moved downwards such as to set down the plant or slip having a clod at the predetermined position onto or in the ground.

2. Device according to claim 1, **characterized in that** the grippers are provided with profiled members which during operation grip onto a clod at its top edge from two opposite sides, whereby the profiled pieces press on the clod both from above as well as from aside.

3. Device according to claim 1 or claim 2, **characterized in that** the grippers comprise both members which are suitable for gripping onto the clod of the plant matter which is to be conveyed, as well as clamping means, such as ribs or sponge material, that are suitable for gripping onto the stalk of the plant matter which is to be conveyed.

4. Device according to any of claims 1-3, **characterized in that** the device is provided with a controlling unit for processing a detection signal of the sensor member into a controlling signal for the planting unit for placing plant matter at its intended position onto or in the bed.

5. Device according to any of the preceding claims, **characterized in that** the device is provided with a cutting unit for separating amongst the plant matter into plants or slips having separate clods.

6. Device according to claim 5, **characterized in that** the cutting unit is provided with first cutting means for cutting the plant matter which is to be placed in a first direction and with second cutting means for cutting in a second direction which intersects the first direction, into plants or slips having separate clods.

7. Device according to claim 6, **characterized in that** the first cutting means for cutting the plant matter in the first direction comprise a number of blades which are mounted spaced apart on an axis.

8. Device according to claim 7, **characterized in that** the mutual spacing between the blades have a step-less or continuous adjustability.

9. Device according to claim 7 or claim 8, **characterized in that** the first cutting means are mounted on a spindle axis.

10. Device according to any of claims 7-9, **characterized in that** one of the first cutting means, preferably the blade at the centre or a blade about half-way along the length of the axis on which the first cutting means are mounted, has a fixed position on this axis.

11. Device according to claim 10, **characterized in that** the device is provided with centre-ing means for centre-ing the plant matter which is to be cut with respect to the blade at the centre or a blade about half-way along the length of the axis on which the first cutting means are mounted

12. Device according to any of claims 5-11, **characterized in that** the device is provided with a conveyor belt for conveying the plant matter which is to be cut to the cutting unit.

13. Device according to claim 12, **characterized in that** the first-cutting means are mounted such that during operation of the device these cut the plant matter in a first direction which substantially coincides with the longitudinal direction of the conveyor belt.

14. Device according to any of claims 6-13, **characterized in that** the second cutting means comprise a blade that during operation of the device cuts loose the plant matter which has been cut in the first direction across the breadth thereof into plants or slips have separate clods.

15. Device according to any of claims 5-14, **characterized in that** the device is provided with a buffering unit between the cutting unit and the planting unit for temporarily accumulating the plants or slips having separate clods which come from the cutting unit.

16. Device according to any of claims 5-14, **characterized in that** the device is provided with a controlling unit for processing a signal from the cutting unit into a controlling signal for the planting unit for placing plants or slips having separate clods at their intended positions on or in the bed.

17. Device according to any of claims 5-16, **characterized in that** the device is provided with a controlling unit for processing a detection signal from the sensor member into a controlling signal for the planting unit for moving, on the basis of this controlling signal, the plants or slips having separate clods which come from the cutting unit to the buffering unit and placing the plants or slips having separate clods which have been cut loose from there at their intended positions on or in the bed.

18. Device according to any of the preceding claims, whereby the device is provided with a driveable frame having a level-controlling system.

19. Method of planting plant matter such as plants or slips onto or in a bed. for example in open farm land or in a horticultural hothouse, using a device which is provided with means for determining an adjustable pattern in the bed, with a sensor member which is optionally mounted on a tow implement and comprising an optical sensor or a metal detector which is suitable for detecting a pattern-reference means, such as a wire or a gauze that has been provided onto or in the bed, and with a planting unit for placing the plant matter at the pattern-determining positions onto or in the bed, whereby the planting unit is provided with convenience members for taking the plant matter which is to be planted to its intended positions on or in the bed, and whereby the convenience members of the planting unit are separately operable,
**characterized in that**,
the method comprises the steps of:
(a) bringing one or more grippers of the planting unit above the plants or slips having separate clods which are to be to be planted at their intended positions on or in the bed;
(b) gripping the plant or slip from above such that the grippers engage the clod of the plant or slip from above;
(c) moving the grippers to above the intended planting positions;
(d) moving the grippers downwards such as to set down the plant or slip having a clod at the predetermined position onto or in the ground; and optionally pressing down the plant or slip after it has been set down; and
(e) letting loose of the slip having a clod which was engaged.

20. Method of planting plant matter such as plants or slips onto or in a bed according to claim 19,
**characterized in that**,
the method comprises steps (a)-(e) and further comprises the step of:
(f) drawing back the grippers to a rest position or to a following position of a buffering unit which may be provided between an optional cutting unit, which in turn may be provided for separating amongst the plant matter into plants or slips having separate clods, and the planting unit for temporarily accumulating the plants or slips having separate clods which come from the cutting unit.

## Patentansprüche

1. Vorrichtung zum Setzen von Pflanzmaterial wie Pflanzen oder Ableger auf oder in ein Beet, zum Beispiel im Freiland oder in einem Treibhaus, wobei die Vorrichtung mit Mitteln zur Bestimmung eines einstellbaren Musters in dem Beet, mit einem Sensorelement, das optional an einem Schleppgerät befestigt ist und einen optischen Sensor oder einen Metalldetektor umfasst, der zur Wahrnehmung eines auf das Muster bezogenen Mittels, wie ein auf oder in einem Beet angebrachter Draht oder ein auf oder in einem Beet angebrachtes Drahtgewebe, und mit einer Pflanzeinheit zum Setzen des Pflanzmaterials an die vom Muster bestimmten Stellen auf oder in das Beet versehen ist, wobei die Pflanzeinheit mit Mitnehmerelementen versehen ist, um das zu pflanzende Pflanzmaterial an seine beabsichtigte Stelle auf oder in dem Bett zu bringen, und wobei die Mitnehmerelemente der Pflanzeinheit separat bedient werden können,
**dadurch gekennzeichnet, dass** die Mitnehmerelemente Greifer umfassen, die, wenn sie Pflanzmaterial nehmen, den Ballen des zu transportierenden Pflanzmaterials von oben anfassen, und die nach unten zu bewegen sind, um die Pflanze oder den Ableger mit einem Ballen an der vorbestimmten Stelle auf oder in den Boden zu setzen.

2. Vorrichtung nach Anspruch 1, **dadurch gekennzeichnet, dass** die Greifer mit Profilelementen versehen sind, die während des Betriebs einen Ballen von zwei sich gegenüberliegenden Seiten an seinem oberen Rand greifen, wobei die Profilteile sowohl von oben als auch seitlich auf den Ballen drücken.

3. Vorrichtung nach Anspruch 1 oder Anspruch 2, **dadurch gekennzeichnet, dass** die Greifer sowohl Elemente, die geeignet sind, den Ballen des zu transportierenden Pflanzmaterials zu greifen, als auch Klemmmittel, wie Rippen oder Schaumstoffmaterial, die geeignet sind, den Stängel des zu transportierenden Pflanzmaterials zu greifen, umfassen.

4. Vorrichtung nach einem der Ansprüche 1-3, **dadurch gekennzeichnet, dass** die Vorrichtung mit einer Regeleinrichtung zur Verarbeitung eines Wahrnehmungssignals des Sensorelements in ein Regelsignal für die Pflanzeinheit zum Setzen von Pflanzmaterial an seine beabsichtigte Stelle auf oder in das Beet versehen ist.

5. Vorrichtung nach einem der obigen Ansprüche, **dadurch gekennzeichnet, dass** die Vorrichtung mit einer Schneideinheit zur Trennung des Pflanzmaterials in Pflanzen oder Ableger mit einzelnen Ballen versehen ist.

6. Vorrichtung nach Anspruch 5, **dadurch gekennzeichnet, dass** die Schneideinheit mit ersten Schneidmitteln zum Schneiden des Pflanzmaterials, das in einer ersten Richtung zu setzen ist, und mit zweiten Schneidmitteln zum Schneiden in einer zweiten, die erste Richtung kreuzenden Richtung in Pflanzen oder Ableger mit einzelnen Ballen versehen ist.

7. Vorrichtung nach Anspruch 6, **dadurch gekennzeichnet, dass** die ersten Schneidmittel zum Schneiden des Pflanzmaterials in der ersten Richtung eine Anzahl Messer, die mit Zwischenräumen an einer Achse befestigt sind, umfassen.

8. Vorrichtung nach Anspruch 7, **dadurch gekennzeichnet, dass** sich der Zwischenraum zwischen den einzelnen Messern stufenlos oder kontinuierlich einstellen lässt.

9. Vorrichtung nach Anspruch 7 oder Anspruch 8, **dadurch gekennzeichnet, dass** die ersten Schneidmittel an einer Spindelachse befestigt sind.

10. Vorrichtung nach einem der Ansprüche 7-9, **dadurch gekennzeichnet, dass** eines der ersten Schneidmittel, vorzugsweise das Messer in der Mitte oder ein Messer etwa auf der halben Länge der Achse, an der die ersten Schneidmittel befestigt sind, eine feste Position an dieser Achse hat.

11. Vorrichtung nach Anspruch 10, **dadurch gekennzeichnet, dass** die Vorrichtung zum Zentrieren des zu schneidenden Pflanzmaterials mit Bezug auf das Messer in der Mitte oder ein Messer etwa auf der halben Länge der Achse, an der die ersten Schneidmittel befestigt sind, mit Zentriermitteln versehen ist.

12. Vorrichtung nach einem der Ansprüche 5-11, **dadurch gekennzeichnet**, das die Vorrichtung zum Transportieren des zu schneidenden Pflanzmaterials zur Schneideinheit mit einem Transportband versehen ist.

13. Vorrichtung nach Anspruch 12, **dadurch gekennzeichnet, dass** die ersten Schneidmittel auf solche Weise befestigt sind, dass sie während des Betriebs der Vorrichtung das Pflanzmaterial in einer ersten Richtung, die im Wesentlichen mit der Längsrichtung des Transportbandes übereinstimmt, schneiden.

14. Vorrichtung nach einem der Ansprüche 6-13, **dadurch gekennzeichnet dass** die zweiten Schneidmittel ein Messer umfassen, das während des Betriebs der Vorrichtung das in der ersten Richtung geschnittene Pflanzmaterial über seine ganze Breite in Pflanzen oder Ableger mit einzelnen Ballen losschneidet.

15. Vorrichtung nach einem der Ansprüche 5-14, **dadurch gekennzeichnet, dass** die Vorrichtung zur temporären Speicherung der von der Schneideinheit kommenden Pflanzen oder Ableger mit einzelnen Ballen mit einer Ausgleichseinheit zwischen der Schneideinheit und der Pflanzeinheit versehen ist.

16. Vorrichtung nach einem der Ansprüche 5-14, **dadurch gekennzeichnet, dass** die Vorrichtung zur Verarbeitung eines Signals von der Schneideinheit in ein Regelsignal für die Pflanzeinheit mit einer Regeleinrichtung versehen ist, um Pflanzen oder Ableger mit einzelnen Ballen an ihre beabsichtigten Stellen auf oder in das Beet zu setzen.

17. Vorrichtung nach einem der Ansprüche 5-16, **dadurch gekennzeichnet, dass** die Vorrichtung zur Verarbeitung eines Wahrnehmungssignals von dem Sensorelement in ein Regelsignal für die Pflanzeinheit mit einer Regeleinrichtung versehen ist, um die von der Schneideinheit kommenden Pflanzen oder Ableger mit einzelnen Ballen auf Grund dieses Regelsignals zur Ausgleichseinheit zu bewegen und die Pflanzen oder Ableger mit einzelnen Ballen, die losgeschnitten sind, von dort an ihre beabsichtigten Stellen auf oder in das Beet zu setzen.

18. Vorrichtung nach einem der obigen Ansprüche, wobei die Vorrichtung mit einem fahrbaren Rahmen mit einem Niveauregelsystem versehen ist.

19. Verfahren zum Pflanzen von Pflanzmaterial wie Pflanzen oder Ableger auf oder in ein Beet, zum Beispiel im Freiland oder in einem Treibhaus, mit einer Vorrichtung, die mit Mitteln zur Bestimmung eines einstellbaren Musters in dem Beet, mit einem Sensorelement, das optional an einem Schleppgerät befestigt ist und einen optischen Sensor oder einen Metalldetektor umfasst, der zur Wahrnehmung eines auf das Muster bezogenen Mittels, wie ein auf oder in dem Beet angebrachter Draht oder ein auf oder in dem Beet angebrachtes Drahtgewebe, und mit einer Pflanzeinheit zum Setzen des Pflanzmaterials an die vom Muster bestimmten Stellen auf oder in das Beet versehen ist, wobei die Pflanzeinheit mit Mitnehmerelementen versehen ist, um das zu pflanzende Pflanzmaterial an seine beabsichtigte Stellen auf oder in dem Beet zu bringen, und wobei die Mitnehmerelemente der Pflanzeinheit separat bedient werden können,
**dadurch gekennzeichnet, dass** das Verfahren folgende Schritte umfasst:
(a) das Bringen von ein oder mehr Greifern der Pflanzeinheit bis über die Pflanzen oder Ableger mit einzelnen Ballen, die an ihren beabsichtigten Stellen auf oder in das Beet zu pflanzen sind;
(b) das Greifen der Pflanze oder des Ablegers von oben auf solche Weise, dass die Greifer den Ballen der Pflanze oder des Ablegers von oben anfassen;
(c) das Bewegen der Greifer bis über die beabsichtigten Pflanzstellen;
(d) das Bewegen der Greifer nach unten, um die Pflanze oder den Ableger mit einem Ballen an der vorbestimmten Stelle auf oder in den Boden zu setzen; und optional das Herunterdrücken der Pflanze oder des Ablegers, nachdem sie oder er abgesetzt worden ist;
(e) das Loslassen des Ablegers mit einem Ballen, der angefasst war.

20. Verfahren zum Pflanzen von Pflanzmaterial wie Pflanzen oder Ableger auf oder in ein Beet nach Anspruch 19, **dadurch gekennzeichnet, dass** das Verfahren die Schritte (a)-(e) umfasst und außerdem folgenden Schritt umfasst:
(f) das Zurückziehen der Greifer in eine Ruhestellung oder in eine folgende Stellung einer Ausgleichseinheit, die zwischen einer optionalen Schneideinheit, die ihrerseits zum Trennen des Pflanzmaterials in Pflanzen oder Ableger mit einzelnen Ballen zur Verfügung gestellt werden kann, und der Pflanzeinheit zur temporären Speicherung der von der Schneideinheit kommenden Pflanzen oder Ableger mit einzelnen Ballen zur Verfügung gestellt werden kann.

## Revendications

1. Dispositif de mise en place de matière végétale telle que des plantes ou des boutures sur ou dans une plate-bande, par exemple dans une surface d'exploitation ouverte ou dans une serre chaude d'horticulture, dans lequel le dispositif comprend des moyens pour déterminer un motif réglable dans la plate-bande, avec un élément de capteur qui est optionnellement monté sur un système de remorque et comprenant un capteur optique ou un détecteur de métal approprié pour détecter un moyen de référence de motif, tel qu'un fil ou un treillis qui a été disposé sur ou dans la plate-bande, et une unité de plantage pour mettre en place la matière végétale aux positions de détermination de motif sur ou dans la plate-bande, dans lequel l'unité de plantage comporte des accessoires de manipulation pour saisir la matière végétale qui doit être plantée dans ses positions prévues sur ou dans la plate-bande, et dans lequel les accessoires de manipulation de l'unité de plantage sont actionnables séparément,
**caractérisé en ce que**,
les accessoires de manipulation comprennent des pinces qui, lors de la saisie de la matière végétale, engagent par le haut la motte de la matière végétale à transporter, et qui doivent être déplacées vers le bas en vue de déposer la plante ou la bouture comportant une motte dans la position prédéterminée sur ou dans le sol.

2. Dispositif suivant la revendication 1, **caractérisé en ce que** les pinces présentent des éléments profilés qui, durant l'opération, saisissent une motte à son bord supérieur à partir de deux côtés opposés, les pièces profilées exerçant une pression sur la motte à la fois par le haut et sur les côtés.

3. Dispositif suivant la revendication 1 ou la revendication 2, **caractérisé en ce que** les pinces comprennent deux éléments appropriés pour saisir la motte de la matière végétale à transporter, ainsi que des moyens de serrage, tels que des nervures ou une masse spongieuse, appropriés pour saisir la tige de la matière végétale à transporter.

4. Dispositif suivant l'une quelconque des revendications 1 à 3, **caractérisé en ce que** le dispositif comprend une unité de commande pour convertir un signal de détection de l'élément de capteur en un signal de commande pour l'unité de plantage en vue de mettre en place la matière végétale dans sa position prévue sur ou dans la plate-bande.

5. Dispositif suivant l'une quelconque des revendications précédentes, **caractérisé en ce que** le dispositif comprend une unité de coupe permettant de séparer la matière végétale en plantes ou en boutures comprenant des mottes séparées.

6. Dispositif suivant la revendication 5, **caractérisé en ce que** l'unité de coupe comprend des premiers moyens de coupe pour couper dans une première direction la matière végétale à mettre en place, et des deuxièmes moyens de coupe pour couper dans une deuxième direction croisant la première direction la matière végétale à mettre en place, en plantes ou en boutures comprenant des mottes séparées.

7. Dispositif suivant la revendication 6, **caractérisé en ce que** les premiers moyens de coupe pour couper la matière végétale dans la première direction comprennent un certain nombre de lames montées avec un espacement sur un axe.

8. Dispositif suivant la revendication 7, **caractérisé en ce que** l'espacement mutuel entre les lames peut être réglé d'une façon graduelle ou continue.

9. Dispositif suivant la revendication 7 ou la revendication 8, **caractérisé en ce que** les premiers moyens de coupe sont montés sur un axe de rotation.

10. Dispositif suivant l'une quelconque des revendications 7 à 9, **caractérisé en ce qu'**un des premiers moyens de coupe, de préférence la lame située au centre ou une lame situé à mi-distance de la longueur de l'axe sur lequel les premiers moyens de coupe sont montés, a une position fixe sur cet axe.

11. Dispositif suivant la revendication 10, **caractérisé en ce que** le dispositif comprend des moyens de centrage pour centrer la matière végétale à couper par rapport à la lame située au centre ou à une lame située à mi-distance de la longueur de l'axe sur lequel les premiers moyens de coupe sont montés.

12. Dispositif suivant l'une quelconque des revendications 5 à 11, **caractérisé en ce que** le dispositif comporte une bande transporteuse pour transporter la matière végétale à couper jusqu'à l'unité de coupe.

13. Dispositif suivant la revendication 12, **caractérisé en ce que** les premiers moyens de coupe sont montés de telle sorte que, durant le fonctionnement du dispositif, ils coupent la matière végétale dans une première direction coïncidant sensiblement avec la direction longitudinale de la bande transporteuse.

14. Dispositif suivant l'une quelconque des revendications 6 à 13, **caractérisé en ce que** les deuxièmes moyens de coupe comprennent une lame qui, durant le fonctionnement du dispositif, coupe librement la matière végétale qui a été coupée dans la première direction à travers la largeur de celle-ci en plantes ou en boutures comprenant des mottes séparées.

15. Dispositif suivant l'une quelconque des revendications 5 à 14, **caractérisé en ce que** le dispositif comprend une unité tampon entre l'unité de coupe et l'unité de plantage pour accumuler temporairement les plantes ou les boutures comprenant des mottes séparées en provenance de l'unité de coupe.

16. Dispositif suivant l'une quelconque des revendications 5 à 14, **caractérisé en ce que** le dispositif comprend une unité de commande pour convertir un signal provenant de l'unité de coupe en un signal de commande pour l'unité de plantage en vue de mettre en place des plantes ou des boutures comprenant des mottes séparées dans leurs positions prévues sur ou dans la plate-bande.

17. Dispositif suivant l'une quelconque des revendications 5 à 16, **caractérisé en ce que** le dispositif comprend une unité de commande pour convertir un signal de détection provenant de l'élément de capteur en un signal de commande pour l'unité de plantage en vue de déplacer, sur la base de ce signal de commande, les plantes ou les boutures comprenant des mottes séparées en provenance de l'unité de coupe jusqu'à l'unité tampon, et pour mettre en place les plantes ou les boutures comprenant des mottes séparées qui en ont été détachées dans leurs positions prévues sur ou dans la plate-bande.

18. Dispositif suivant l'une quelconque des revendications précédentes, dans lequel le dispositif comprend un cadre actionnable équipé d'un système de contrôle du niveau.

19. Procédé pour planter une matière végétale telle que des plantes ou des boutures sur ou dans une plate-bande, par exemple dans une surface d'exploitation ouverte ou dans une serre chaude d'horticulture, en utilisant un dispositif comprenant des moyens pour déterminer un motif réglable dans la plate-bande, avec un élément de capteur qui est optionnellement monté sur un système de remorque et comprenant un capteur optique ou un détecteur de métal approprié pour détecter un moyen de référence de motif, tel qu'un fil ou un treillis qui a été disposé sur ou dans la plate-bande, et avec une unité de plantage pour mettre en place la matière végétale aux positions de détermination de motif sur ou dans la plate-bande, dans lequel l'unité de plantage comporte des accessoires de manipulation pour saisir la matière végétale qui doit être plantée dans ses positions prévues sur ou dans la plate-bande, et dans lequel les accessoires de manipulation de l'unité de plantage sont actionnables séparément,
**caractérisé en ce que**:
le procédé comprend les étapes consistant à:
(a) amener une ou plusieurs pince(s) de l'unité de plantage au-dessus des plantes ou des boutures comprenant des mottes séparées à planter dans leurs positions prévues sur ou dans la plate-bande;
(b) saisir la plante ou la bouture par le haut de telle sorte que les pinces engagent la motte de la plante ou de la bouture par le haut;
(c) déplacer les pinces pour les amener au-dessus des positions de plantage prévues;
(d) déplacer les pinces vers le bas de manière à déposer la plante ou la bouture comprenant une motte à la position prédéterminée sur ou dans le sol, et optionnellement enfoncer la plante ou la bouture après qu'elle ait été déposée; et
(e) lâcher les boutures comprenant une motte qui a été engagée.

20. Procédé pour planter une matière végétale telle que des plantes ou des boutures sur ou dans une plate-bande suivant la revendication 19, **caractérisé en ce que**:
le procédé comprend les étapes (a) à (e), et comprend en outre l'étape consistant à:
(f) retirer les pinces dans une position de repos ou dans une position suivante d'une unité tampon qui peut être prévue entre une unité de coupe optionnelle, qui peut à son tour être prévue pour séparer la matière végétale en plantes ou en boutures comprenant des mottes séparées, et l'unité de plantage pour accumuler temporairement les plantes ou les boutures comprenant des mottes séparées provenant de l'unité de coupe.
